(19) Europäisches Patentamt / European Patent Office / Office européen des brevets

(11) **EP 3 400 321 B1**

(12) **FASCICULE DE BREVET EUROPEEN**

(45) Date de publication et mention de la délivrance du brevet:
**27.11.2019 Bulletin 2019/48**

(21) Numéro de dépôt: **17701170.7**

(22) Date de dépôt: **04.01.2017**

(51) Int Cl.:
*C25B 15/02* (2006.01)    *C25B 15/08* (2006.01)
*C25B 1/12* (2006.01)

(86) Numéro de dépôt international:
**PCT/FR2017/050017**

(87) Numéro de publication internationale:
**WO 2017/118812 (13.07.2017 Gazette 2017/28)**

(54) **SYSTÈME DE PRODUCTION DE DIHYDROGÈNE, ET PROCÉDÉ ASSOCIÉ**

SYSTEM ZUR ERZEUGUNG VON DIHYDROGEN UND ZUGEHÖRIGES VERFAHREN

SYSTEM FOR PRODUCING DIHYDROGEN, AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1650007**

(43) Date de publication de la demande:
**14.11.2018 Bulletin 2018/46**

(73) Titulaire: **Electricité de France**
**75008 Paris (FR)**

(72) Inventeur: **COLOMAR, David**
**67500 Haguenau (FR)**

(74) Mandataire: **Regimbeau**
**20, rue de Chazelles**
**75847 Paris Cedex 17 (FR)**

(56) Documents cités:
**EP-A1- 2 803 755        US-A1- 2013 048 507**
**US-A1- 2015 340 749**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

DOMAINE TECHNIQUE GENERAL

La présente invention concerne un système de production de dihydrogène par électrolyse.

ETAT DE L'ART

Dans un contexte de fort développement des solutions décarbonnées, c'est-à-dire faiblement émissives en dioxyde de carbone, pour la mobilité et le transport de biens et de passagers, le dihydrogène apparait comme un carburant prometteur.

Son utilisation, associée à des piles à combustible et à un moteur électrique dans un véhicule, peut représenter une alternative aux carburants fossiles, surtout s'il est produit par des énergies elles-mêmes propres, notamment par électrolyse de l'eau. Certains constructeurs, comme Toyota, ont déjà commencé la commercialisation de véhicules à hydrogène, d'autres introduiront leurs premiers véhicules d'ici 2020.

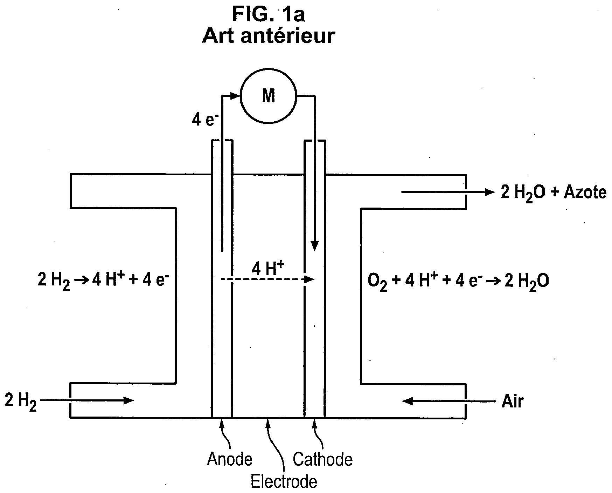

Le fonctionnement d'une pile à combustible (dont un exemple est représenté par la **figure 1a**) est régi par les réactions d'oxydo-réduction suivantes :

- A l'anode : $2H_2 \rightarrow 4\,H^+ + 4e^-$
- A la cathode : $O_2 + 4\,H^+ + 4e^- \rightarrow 2H_2O$

Le flux d'électrons produits à l'anode peut ainsi alimenter une charge électrique avant d'être réacheminé jusqu'à la cathode.

L'hydrogène est aujourd'hui majoritairement produit en grande quantité par vaporeformage d'hydrocarbures, principalement de gaz naturel (méthane, la réaction de vaporeformage étant alors décrite par l'équation suivante : $CH_4 + 2H_2O + chaleur \rightarrow 4\,H_2 + CO_2$), transporté et livré par camions dans des cadres bouteilles à 200 bar à la station-service, où il est comprimé dans un compresseur jusqu'à des pressions de 420 à 880 bar, avant d'être stocké dans des réservoirs à haute pression dans la station-service (en effet la faible densité volumique du dihydrogène gazeux - 89 grammes, soit 3,54 kWh d'énergie, dans un mètre cube de de dihydrogène dans les conditions normales de température et de pression - implique de le comprimer à 350 bar ou 700 bar selon le type de véhicule pour atteindre une densité suffisante pour l'utilisation comme carburant).

Cette méthode de production par vaporeformage présente l'avantage d'être industriellement mature et peu coûteuse. Toutefois, elle présente de nombreux inconvénients : elle consomme de l'énergie fossile, est fortement émettrice de dioxyde de carbone, et elle n'est bien adaptée qu'à la production massive dans des unités de grande taille (jusqu'à plusieurs centaines de MW). Dans le cas d'une utilisation décentralisée de l'hydrogène, il faut donc transporter par camion le dihydrogène produit, et le livrer en cadres bouteilles, ce qui entraîne des coûts économiques et énergétiques substantiels.

Aussi, les industriels se tournent de plus en plus vers une technologie alternative : l'électrolyse de l'eau, qui utilise de l'électricité au lieu des énergies fossiles pour séparer le dihydrogène du dioxygène et peut être réalisée dans de petites unités décentralisées, voire sur le lieu où l'hydrogène est utilisé, par exemple la station-service. Le principe de l'électrolyse peut être résumé par l'équation suivante : $2H_2O + électricité \rightarrow 2\,H2 + O2$.

L'électrolyse présente de nombreux avantages : elle ne produit pas de dioxyde de carbone si l'électricité est décarbonnée (par exemple d'origine nucléaire ou renouvelable), elle est flexible et peut donc apporter des services au réseau électrique et c'est une technologie modulaire, qui peut être de petite taille (moins d'un MW) et donc bien adaptée à la production décentralisée. En revanche, elle présente l'inconvénient de consommer une énergie chère : l'électricité. Aussi, la question de son rendement est cruciale.

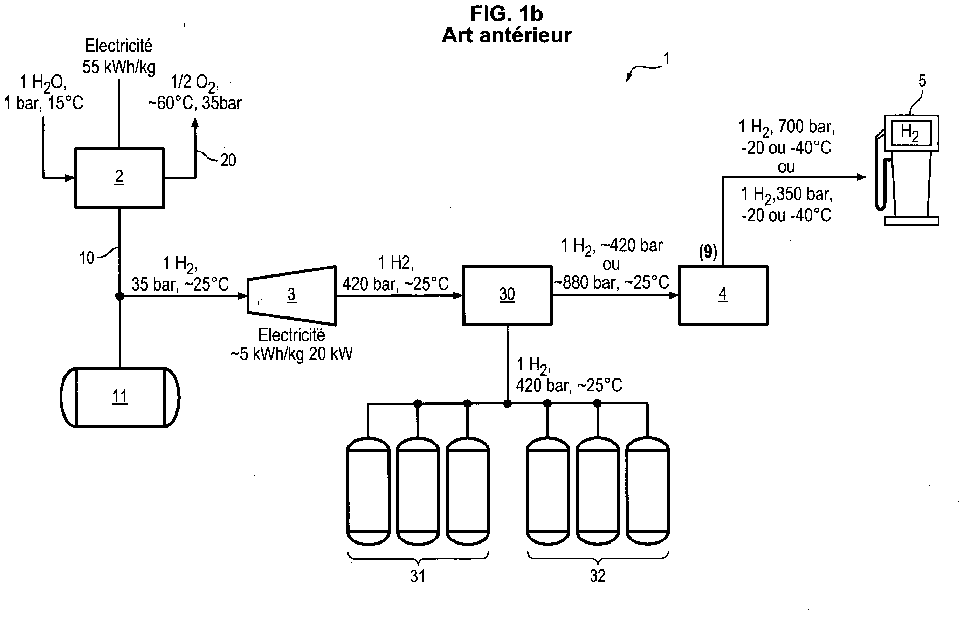

La **figure 1b** représente une installation connue comprenant un électrolyseur 2 consommant 55 kWh d'énergie électrique pour son fonctionnement. Ce type d'électrolyseur 2 rejette dans l'atmosphère (via un circuit auxiliaire 20) ½ mole de dioxygène par mole de dihydrogène produite. Le dihydrogène est produit à au moins 16 bars, avantageusement au moins 30 bar, et de façon préférée environ 35 bar, 60°C, puis purifié et refroidi à l'intérieur de l'électrolyseur, avant de quitter celui-ci à 35 bar et 25°C. Il est alors acheminé vers un ballon de stockage tampon 11 où il est stocké à 35 bar.

Le dihydrogène est ensuite acheminé un circuit principal 10 jusqu'au compresseur 3, dont il sort à une pression de l'ordre de 420 bar ou de 880 bar, selon qu'il est destiné à alimenter des véhicules à 350 bar ou 700 bar. Le compresseur consomme entre 4 et 6 kWh par kilogramme de dihydrogène comprimé (+/- 1 kWh). Une valeur moyenne de 5 kWh d'électricité par kg de dihydrogène comprimé a été retenue.

Le dihydrogène continue à circuler sur le circuit principal 10 jusqu'à un équipement de gestion 30, qui se compose principalement d'un jeu de vannes et de différents capteurs, qui le redirige jusqu'à un stockage à haute pression 31, 32, à au moins 400 bar ou 800 bar selon les réservoirs. Lorsque des véhicules viennent faire le plein et que la pression dans les réservoirs à haute pression 31 (400 bar) et 32 (800 bar) diminue au-dessous d'une valeur seuil, le compresseur 3 se met en marche et vient prélever le dihydrogène dans le ballon tampon 11, jusqu'à ce que les réservoirs haute pression 31, 32 soient plein ou que la pression dans le ballon tampon 11 soit descendue à sa pression minimale (supposée ici de 10 bar), et ainsi de suite.

Lorsqu'un véhicule se présente à la station-service, l'équipement de gestion 30 du dihydrogène prélève le dihydrogène du stockage haute pression 31, 32 et l'achemine jusqu'à un refroidisseur 4, dans lequel il est refroidi à une température comprise entre -20°C et -40°C selon le choix de l'opérateur de la station.

En effet, la recharge en hydrogène d'un véhicule s'effectue par simple transfert de pression, le gaz stocké à la station se déversant dans le véhicule jusqu'à ce que le réservoir du véhicule soit plein ou que l'équilibre des pressions soit atteint.

Or, lors de ce transfert, la température du dihydrogène s'élève sensiblement du fait de l'apport d'énergie mécanique (l'hydrogène résiduel à l'intérieur du réservoir subit une très forte compression). Si le processus de transfert n'est pas contrôlé, la température du dihydrogène peut théoriquement atteindre des valeurs supérieures à 100°C. Or, des composants utilisés aujourd'hui par l'industrie automobile pour la gestion et le stockage embarqué de l'hydrogène sont réalisés à base de polymères, qui ne supportent pas des températures supérieures à 80°C. Cela explique que, les protocoles de recharge largement utilisés dans l'industrie (notamment la norme SAE J2601) préconisent de refroidir le dihydrogène à -20°C, voire à -40°C avant d'effectuer le remplissage dans le véhicule.

Ce refroidissement s'effectue à l'aide du refroidisseur 4, qui est typiquement une machine frigorifique par exemple de type pompe à chaleur faisant changer d'état un fluide caloporteur. Une telle technologie est coûteuse en investissement et en maintenance, et fortement consommatrice d'énergie : le refroidisseur 4 consomme environ 1 kWh d'électricité par kilogramme de dihydrogène refroidi.

Le dihydrogène refroidi est alors distribué via des pompes 5, selon qu'il s'agit d'un utilisateur équipé d'un véhicule à 350 bar ou 700 bar.

Le rendement énergétique d'un tel dispositif est le suivant :

$$r = PCS / Qinv = 39,4 / (55+5+1)$$
$$r = 64,6\%$$

Cette solution présente deux inconvénients : un coût d'investissement élevé à la station, et un rendement faible.

Il serait ainsi souhaitable de réduire les coûts d'investissement et les coûts énergétiques associés à la production et la gestion d'un hydrogène comprimé et refroidi pour son utilisation dans des véhicules, afin d'accélérer la percée d'une utilisation industrielle et à grande échelle de l'hydrogène.

PRESENTATION DE L'INVENTION

L'invention propose de pallier ces inconvénients en proposant selon un premier aspect un système de production de dihydrogène comprenant :

- un électrolyseur adapté pour mettre en œuvre une électrolyse d'eau et produire du dioxygène et du dihydrogène ;

- un compresseur de dihydrogène ;
- un refroidisseur de dihydrogène ;
- un circuit principal de dihydrogène issu de l'électrolyseur, sur lequel sont disposés successivement au moins le compresseur et le refroidisseur ;
- un circuit auxiliaire de dioxygène et de vapeur d'eau résiduelle issus de l'électrolyseur,

le système étant caractérisé en ce que :

- il comprend en outre un condenseur de ladite vapeur résiduelle ;
- le refroidisseur comprend un détendeur, un échangeur et un module de stockage thermique ;

le condenseur, le détendeur et l'échangeur étant successivement disposés sur le circuit auxiliaire, l'échangeur mettant en échange thermique le dihydrogène comprimé par le compresseur, le dioxygène détendu par le détendeur et le module de stockage thermique.

Le dispositif selon l'invention est avantageusement complété par les caractéristiques suivantes, prises seules ou en une quelconque de leur combinaison techniquement possible :

- le condenseur met en échange thermique le dioxygène et la vapeur d'eau résiduelle issus de l'électrolyseur avec le dioxygène sortant de l'échangeur du refroidisseur ;
- l'échangeur est disposé au sein du module de stockage thermique ;
- le détendeur est également disposé au sein du module de stockage thermique ;
- le refroidisseur comprend en outre une paroi isolante enveloppant le module de stockage thermique ;
- le module de stockage thermique utilise au moins un matériau à changement de phase ;
- le module de stockage thermique comprend une première zone remplie d'un premier matériau à changement de phase présentant une première température de fusion, et une deuxième zone remplie d'un deuxième matériau à changement de phase présentant une deuxième température de fusion supérieure à la première température de fusion ;
- l'échangeur s'étend au sein de chacune des première et deuxième zones de sorte à être en échange thermique successif avec chacun des premier et deuxièmes matériaux à changement de phase ;
- l'échangeur est à contre-courant, de sorte que le dioxygène détendu par le détendeur est échange thermique avec le premier matériau à changement de phase puis le premier matériau à changement de phase, et le dihydrogène comprimé par le compresseur est en échange thermique avec le deuxième matériau à changement de phase puis le premier matériau à changement de phase ;
- la première température de fusion est inférieure à -20°C, et la deuxième température de fusion est entre 0 et 20°C ;

- la première température de fusion est inférieure à -40°C, un sécheur étant disposé sur le circuit auxiliaire entre le condenseur et le détendeur ;
- le système comprend en outre un équipement de gestion du dihydrogène disposé sur le circuit principal entre le compresseur et le refroidisseur, ledit équipement de gestion étant connecté à au moins un réservoir haute pression, et configuré de sorte à fournir au refroidisseur du dihydrogène de manière intermittente.
- Le système comprend au moins un équipement de distribution disposé sur le circuit principal en aval du refroidisseur, l'équipement de gestion étant configuré pour fournir au refroidisseur du dihydrogène lorsque l'équipement de distribution est utilisé ;
- le compresseur est également configuré de sorte à fournir à l'équipement de gestion du dihydrogène de manière intermittente, de sorte à ce que la pression dans ledit réservoir haute pression soit compris entre un seuil minimal et un seuil maximal ;
- le dioxygène et le dihydrogène présentent en sortie de l'électrolyseur des pressions d'au moins 13 bar, avantageusement au moins 30 bar.

Selon un deuxième aspect, l'invention concerne un procédé de production de dihydrogène dans le système, caractérisé en ce qu'il comprend des étapes de :

- Electrolyse d'eau dans un électrolyseur de sorte à produire du dioxygène et du dihydrogène ;
- Compression du dihydrogène par un compresseur ;
- Condensation de vapeur d'eau résiduelle mélangée avec le dioxygène dans un condenseur ;
- Détente du dioxygène dans un détendeur ;
- Refroidissement du dihydrogène comprimé par échange thermique avec le dioxygène détendu via un échangeur en échange thermique avec un module de stockage thermique.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1a précédemment décrite est un schéma d'une pile à hydrogène connue ;
- la figure 1b précédemment décrite est un schéma d'un système de production de dihydrogène connu ;
- les figures 2 est un schéma d'un système de production de dihydrogène selon l'invention ;
- les figures 3a et 3b sont des schémas de deux modes de réalisation particulièrement préférés d'un refroidisseur d'un système de production de dihydrogène selon l'invention.

Sur les différentes figures, les éléments similaires portent les mêmes références numériques, et les valeurs de températures et de pression indiquées sont uniquement à titre d'exemple non limitatif.

DESCRIPTION DETAILLEE

*Architecture générale*

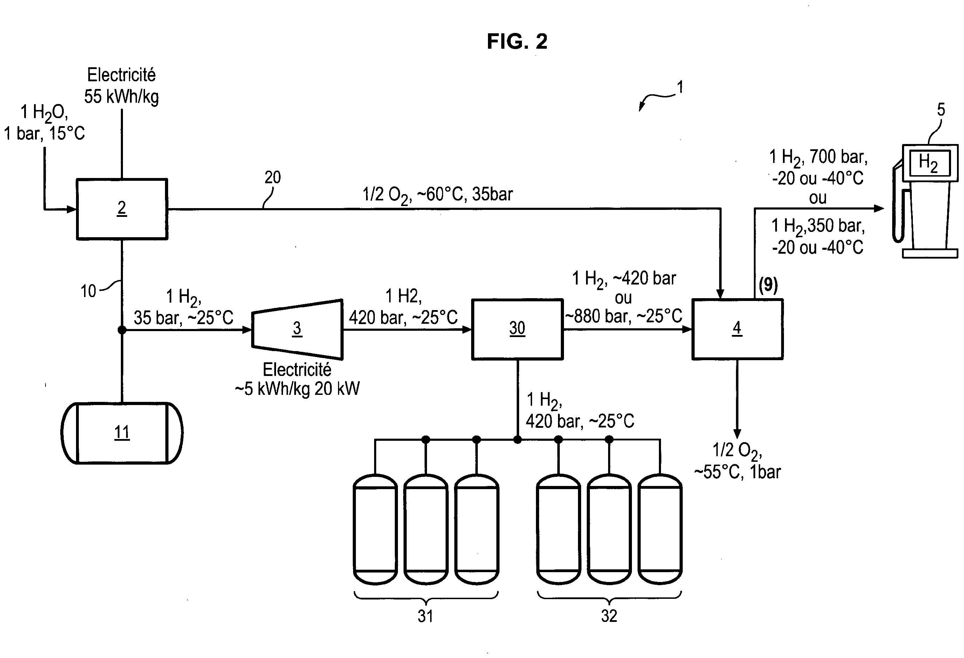

La **figure 2** représente le présent système 1 de production de dihydrogène. Comme l'on va voir, ce système est avantageusement également un système de distribution de dihydrogène, en particulier pour des véhicules. Le système peut ainsi prendre la forme d'une station-service.

Dans tous les cas, le système 1 présente une architecture globale similaire à celle du système conforme à la figure 1b, et est centré autour d'un électrolyseur 2 (qui peut être de nombreux types) et un compresseur 3.

L'électrolyseur 2 produit au niveau de sa cathode du dihydrogène, et au niveau de son anode du dioxygène, qui est mélangé avec la vapeur d'eau résiduelle.

Le système 1 comprend ainsi comme expliqué un circuit principal 10 de dihydrogène sur lequel sont disposés successivement au moins l'électrolyseur 2, le compresseur 3, le cas échéant un équipement de gestion 30 du dihydrogène, un refroidisseur 4, et le cas échéant des équipements de distribution 5 du dihydrogène, en particulier pour des véhicules (les équipements 5 sont alors de type « pompe de station-service », éventuellement couplés avec des moyens de mesure du volume distribué et des moyens de paiement associés).

Une branche de circuit principal 10 peut prélever en sortie de l'électrolyseur 2 du dihydrogène pour stockage temporaire sur un ballon tampon 11.

Le système comprend en outre un circuit auxiliaire 20 de dioxygène et de vapeur d'eau résiduelle issus de l'électrolyseur 2.

Par ailleurs, comme expliqué l'équipement de gestion 30 du dihydrogène peut comprendre un ensemble de réservoirs haute pression 31, 32 pour le stockage à au moins 400 bar et/ou 800 bar.

*Refroidissement*

Le présent système 1 se distingue par une utilisation du dioxygène fatal produit par l'électrolyseur 2 (circulant sur le circuit auxiliaire 20 de dioxygène et de vapeur d'eau résiduelle) comme source d'énergie cryogénique.

Dans ce but, on convertit l'énergie de pression contenue dans le dioxygène en énergie cryogénique dans le système de refroidissement 4 adapté à cet effet. Comme l'on verra plus loin celui-ci comprend à ce titre entre autres un détendeur 40, permettant une détente adiabatique entraînant une chute de température du dioxygène jusqu'à des températures négatives, et d'un échangeur thermique 41, dans lequel les frigories générées par la détente du dioxygène sont utilisées pour refroidir le dihydrogène jusqu'à la température souhaitée. L'échangeur 41 met en échange thermique le dihydrogène et le dioxygène sans qu'il y ait mélange de sorte à garder la pureté du dihydrogène.

On note que le détendeur 40 peut être remplacé par plusieurs détendeurs connectés en série, afin de réguler la détente du dioxygène et de se rapprocher d'une détente isotherme, qui permettrait de générer plus de frigories

Une analyse thermodynamique menée a permis de démontrer que les frigories produites par la détente du dioxygène (0,34 kWh/kg de dihydrogène, ou plus si la détente n'est pas purement adiabatique) est suffisante pour abaisser jusqu'à -40°C la température de la quantité de dihydrogène correspondante (0.33 kWh/kg dans le cas le plus pessimiste). Le dioxygène sous pression est donc bien adapté pour la production de froid requise pour le dihydrogène.

Le rendement d'un tel dispositif est le suivant :

$$r = PCS \; / \; Qinv = 39{,}4 \; / \; (55{+}5)$$

$$r = 65{,}7\%$$

On gagne donc 1,1 % de rendement par rapport à la solution connue. En outre, on supprime un appel de puissance potentiellement élevé (supérieur à 20 kW), ce qui peut avoir un impact favorable sur les coûts de raccordement au réseau électrique.

Cependant, la mise en œuvre de cette utilisation se heurte à deux problèmes qui comme l'on va voir sont résolus par la présente invention.

Tout d'abord, la demande de froid et la production d'oxygène ne sont pas simultanées.

En effet, l'équipement de gestion 30 est configuré de sorte à fournir au refroidisseur 4 du dihydrogène de manière intermittente. Plus précisément, la demande de dihydrogène correspond à une sollicitation au niveau d'un équipement de distribution 5 (i.e. un utilisateur fait le plein), et l'équipement de gestion 30 est ainsi configuré pour fournir au refroidisseur 4 du dihydrogène lorsque l'équipement de distribution 5 est utilisé.

Or l'équipement de gestion 30 reçoit lui-même du dihydrogène de façon intermittente : le compresseur 4 est typiquement également configuré de sorte à fournir à l'équipement de gestion 30 du dihydrogène de sorte à ce que la pression dans ledit réservoir haute pression 31, 32 soit comprise entre un seuil minimal et un seuil maximal. Il peut y avoir plusieurs seuils minimaux et maximaux s'il y a plusieurs niveaux de pression, par exemple 400/440 bars et 800/880 bars s'il y a deux niveaux de pression de stockage 31, 32.

L'électrolyseur 2 quant à lui fonctionne de manière plus ou moins continue, le dihydrogène produit étant stocké dans l'éventuel ballon tampon 11 entre 10 et 35 bars, dans lequel le compresseur 3 vient prélever quand c'est nécessaire. Il est tout à fait possible que l'électrolyseur fonctionne lui-même de manière intermittente, mais dans tous les cas ses périodes de fonctionnement ne peuvent coïncider avec les périodes de demandes par l'utilisateur, qui sont par définition imprévisibles.

Ensuite, le refroidissement du dioxygène est susceptible de générer de la condensation, qui se transformerait immédiatement en gel à très basse température et pourrait rendre l'opération techniquement irréalisable.

Le présent système permet de résoudre ces problèmes, en associant un condenseur 21 de ladite vapeur résiduelle disposé sur le circuit auxiliaire 20 en amont du détendeur 40 et un module de stockage thermique 42a, 42b (équipant le refroidisseur 4) en échange thermique avec l'échangeur 41.

Ce condenseur est en fait un système de séchage. En effet, la baisse de température du dioxygène entraîne une condensation de l'eau présente à l'état de vapeur dans le dioxygène. Comme on va le voir, cela permet de sécher gratuitement le dihydrogène tout en permettant des fonctionnements décalés dans le temps de l'électrolyseur 2 et du refroidisseur 4.

*Refroidisseur*

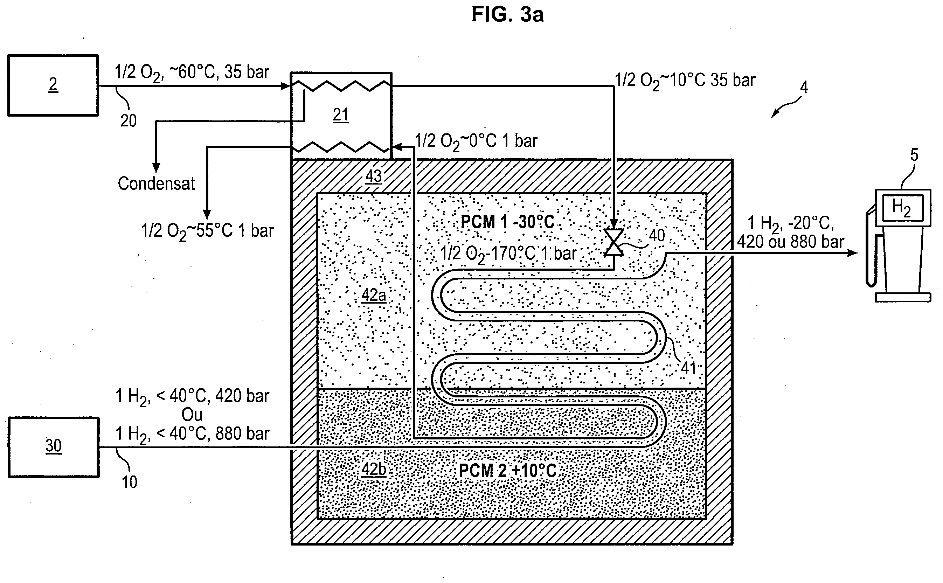

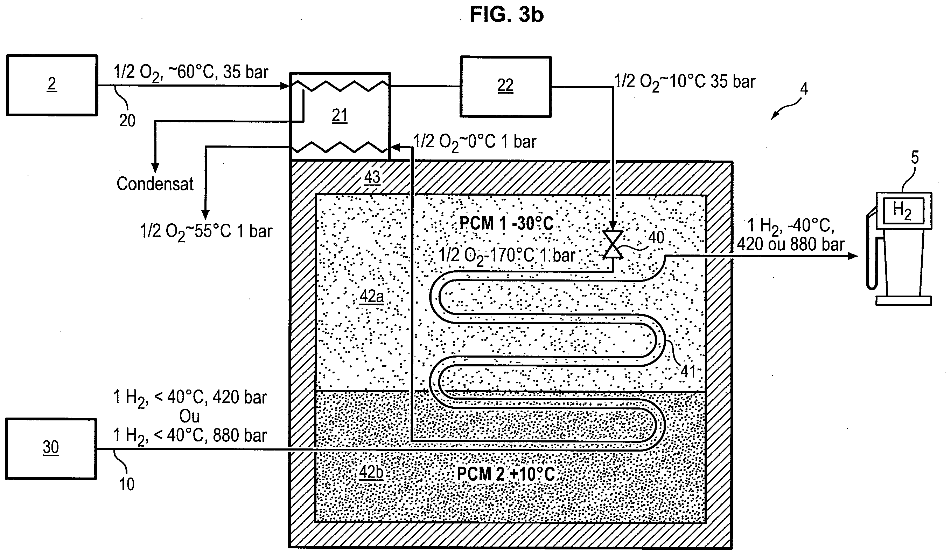

En référence aux **figures 3a** et **3b** qui représentent deux modes de réalisation préférés qui vont être décrits plus en détail plus loin, le condenseur 21 est avantageusement un échangeur alimenté en énergie par échange thermique avec le dioxygène sortant de l'échangeur 41 du refroidisseur 4. En d'autres termes, le dioxygène sec détendu par le détendeur 40 et ayant cédé ses frigories au niveau de l'échangeur 41 est toujours à niveau d'énergie bas (la température maximum du module de stockage thermique 42a, 42b comme on va voir), typiquement à environ 0°C.

Par échange thermique avec ce dioxygène frais, le dioxygène à haute pression mélangé avec la vapeur d'eau résiduelle issus de l'électrolyseur 2 est refroidi suffisamment bas pour que la condensation de l'eau ait lieu.

L'échangeur 41 est avantageusement disposé au sein du module de stockage thermique 42a, 42b, i.e. en prise thermique directe. Cela fait que le module de stockage thermique 42a, 42b sert de tampon thermique : les frigories apportées « en trop » par le dioxygène sont captées par ce module 42a, 42b, et libérées en cas de forte demande à la pompe 5.

Plus précisément le refroidisseur 4 est avantageusement un équipement sensiblement adiabatique, comprenant une paroi isolante 42 enveloppant le module de stockage thermique 42a, 42b, lui-même enveloppant l'échangeur 41 et le cas échéant le détendeur 40 pour récupérer le maximum d'énergie. On note qu'il est tout à fait possible que le détendeur 40 reste externe.

De nombreuses technologies existent pour le module de stockage thermique, à commencer par l'utilisation d'un matériau à forte capacité calorifique (stockage du froid de manière sensible dans une céramique, un gel ou liquide frigorifique, ce dernier améliorant l'échange thermique), mais de façon préférée, le module de stockage thermique 42a, 42b utilise au moins un matériau à changement de phase. On appelle matériau à changement de phase - ou MCP - tout matériau capable de changer d'état physique dans une plage de température restreinte, autour d'une température de référence prédéterminée dite température de fusion qui le caractérise.

Un matériau à changement de phase met en œuvre un transfert thermique par chaleur latente. Il peut stocker ou céder de l'énergie par simple changement d'état, tout en conservant une température constante, celle du changement d'état (i.e. la température de fusion). En échange thermique avec un milieu à une température en dessous de la température de fusion, le matériau à changement de phase se solidifie en augmentant la température dudit milieu ; et en échange thermique avec un milieu à une température au-dessus de la température de fusion, le matériau à changement de phase se liquéfie en diminuant la température dudit milieu.

Plus précisément, en cas d'excès de dioxygène (température basse au niveau de l'échangeur 41 car le dihydrogène ne présente pas un débit permettant d'absorber toutes les frigories) ; on stocke ces frigories par solidification du matériau à changement de phase, et en cas de déficit de dioxygène (température haute au niveau de l'échangeur 41 car le dihydrogène présente un débit élevé absorbant toutes les frigories sans que cela suffise à refroidir suffisamment le dihydrogène), on libère des frigories par liquéfaction du matériau à changement de phase.

Dans le cas d'espèce on pourra par exemple choisir une solution d'eau salée ou glycolée, présentant une température de fusion basse (inférieure à -10°C), qu'on peut régler en faisant varier la concentration.

De façon préférée, le module de stockage thermique 42a, 42b comprend une première zone 42a remplie d'un premier matériau à changement de phase présentant une première température de fusion, et une deuxième zone 42b remplie d'un deuxième matériau à changement de phase présentant une deuxième température de fusion supérieure à la première température de fusion.

Cela permet à l'échangeur 41 de s'étendre au sein de chacune des première et deuxième zones 42a, 42b de sorte à être en échange thermique successif avec chacun des premier et deuxième matériaux à changement de phase.

En particulier, l'échangeur 41 est à contre-courant, de sorte que le dioxygène détendu par le détendeur 40 est échange thermique avec le premier matériau à changement de phase puis le premier matériau à changement de phase, et le dihydrogène comprimé par le compresseur 3 est en échange thermique avec le deuxième matériau à changement de phase puis le premier matériau à changement de phase.

Cela correspond à un réchauffement progressif du dioxygène détendu, et un refroidissement progressif du dihydrogène.

Cette caractéristique très avantageuse utilisée dans les deux modes de réalisation préférés des figures 3a et 3b permet un stockage thermique à deux niveaux, lequel permet d'atteindre encore plus facilement les basses températures requises pour la distribution du dihydrogène, tout en limitant au maximum la consommation d'énergie externe.

La première température de fusion est avantageusement inférieure à -20°C (voire inférieure à -40°C), et la deuxième température de fusion est avantageusement entre 0 et 20°C.

Il est possible de n'utiliser qu'un seul matériau à changement de phase. Dans ce cas, seule une partie du gisement thermique du dioxygène serait récupéré, mais cette quantité peut suffire, si un profil de détente adapté est sélectionné. Il est d'ailleurs possible d'utiliser plus de deux matériaux à changement de phase.

On note que l'utilisation de matériaux à changement de phase comme solution de stockage des frigories pour l'application station-service dihydrogène n'est pas la seule solution (on peut comme expliqué stocker le froid de manière sensible dans une céramique ou autres) mais présente plusieurs avantages dans le cadre de cette application, principalement une densité massique de stockage importante et une plage de température de fonctionnement limitée pour le système de refroidissement (-30°C/+10°C au lieu de -170°C/0°C) qui limite les pertes thermiques et garantit la stabilité de fonctionnement. Dans le cas d'une utilisation d'une liquide frigorifique stockant le froid de manière sensible, on peut créer un gradient de température dans le refroidisseur 4 afin de récupérer l'ensemble du gisement énergétique (et reproduire la pluralité de matériaux à changement de phase).

On notera également que dans un tout autre registre, le module de stockage thermique peut consister en un réservoir de stockage de dioxygène sous pression (typiquement à 35 bar). Dans ce cas, c'est l'énergie mécanique du dioxygène qui serait en pratique stockée et non l'énergie thermique. La production de froid a alors lieu sur demande : le dioxygène est détendu lorsqu'une demande de dihydrogène intervient et non lors de la production de ce dioxygène).

De préférence on utilisera toutefois un stockage physique du froid, car le stockage de dioxygène est coûteux et prend beaucoup de place (un ou plusieurs ballons d'un volume cumulé de 16 m$^3$ pour une consommation journalière de 100 kg de dihydrogène).

Dans tous les cas, le refroidisseur 4 peut être couplé à un autre refroidisseur classique (pompe à chaleur), qui ne serait pas utilisé en fonctionnement normal, mais uniquement en secours, dans le cas où la production de froid de la solution proposée serait insuffisante. Dans ce cas, le groupe froid conventionnel pourrait être nettement plus petit que dans l'art antérieur (figure 1b), ce qui permettrait de réduire le coût d'investissement.

*Premier mode de réalisation préféré*

En référence à la figure 3a, est représenté un premier mode de réalisation préféré du système 1, équipé d'un premier matériau à changement de phase présentant une première température de fusion d'environ -30°C. Le deuxième matériau à changement de phase présente une deuxième température de fusion d'environ +10°C.

Le dioxygène à 35 bar entre tout d'abord via dans le condenseur 21 où il est pré-refroidi à 10°C par le dioxygène détendu. La quantité de condensat collectée est évaluée à 24 g/kg d'H2. A 10°C, il subsiste dans le dioxygène une pression partielle de 12 mBar de vapeur, soit 1,5 g/kg d'H2. Après détente de 35 bar à 1 bar, cette pression partielle ne sera plus que de 1,5 mBar, ce qui correspond à une température de condensation de -32°C.

La température du dioxygène peut donc chuter jusqu'à cette température sans entraîner de condensation, i.e. sans risque de gel.

Ensuite le dioxygène sort du condenseur 21 et est acheminé jusqu'au refroidisseur 4. Il passe tout d'abord dans le détendeur 40 qui fait chuter sa pression de 35 bar à 1 bar et sa température jusqu'à une valeur négative pouvant aller en théorie jusqu'à -170°C (détente adiabatique), mais qui sera plus vraisemblablement maintenue à la température proche de la température minimale du refroidisseur (la première température de fusion, ici -30°C) par échange thermique simultané avec le premier matériau à changement de phase de la première zone 42a (détente isotherme).

Le dioxygène sort du détendeur 40 circule ensuite dans le premier échangeur 41 qui facilite l'échange thermique avec la première zone 42a, remplie du premier matériau à changement de phase. Celui-ci peut être par exemple une solution d'eau salée caractérisé par sa température de fusion, de l'ordre de -30°C. Le dioxygène échange avec ce premier matériau à changement de phase des frigories, jusqu'à ce que sa température atteigne une valeur de -40°C. Le premier matériau à changement de phase se solidifie sous l'action du transfert thermique, et stocke ainsi les frigories.

Le dioxygène est ensuite acheminé (en suivant l'échangeur 41) vers la deuxième zone 42b, remplie du deuxième matériau à changement de phase, qui se caractérise par une deuxième température de fusion de l'ordre de +10°C, dans lequel sont stockées des frigories supplémentaires par solidification de ce deuxième matériau à changement de phase, jusqu'à ce que le dioxygène atteigne une température de l'ordre de 0°C.

Le dioxygène est alors acheminé jusqu'au condenseur 21 où les dernières frigories disponibles sont utilisées pour pré-refroidir le dioxygène sous pression. Il quitte enfin le condenseur 21 à une température de l'ordre de 55°C et est évacué dans l'air ambient.

Le dihydrogène est acheminé depuis l'équipement 30 de gestion jusqu'au refroidisseur 4, où il passe successivement dans deuxième et première zone 42a, 42b (i.e. en contact du deuxième puis premier matériau à changement de phase). Ces matériaux à changement de phase libèrent le froid stocké en passant à l'état liquide, et le dihydrogène est refroidi jusqu'à au moins -20°C.

L'ensemble du module de stockage thermique 42a, 42b est isolé du milieu ambiant à l'aide de la paroi isolante 43, caractérisée par son adaptation à l'isolation thermique, pour une différence de température entre l'intérieur et l'extérieur jusqu'à 70°K.

*Deuxième mode de réalisation*

En référence à la figure 3b, est représenté un second mode de réalisation préféré du système 1, équipé d'un premier matériau à changement de phase présentant cette fois une première température de fusion d'environ -50°C. Le deuxième matériau à changement de phase présente toujours une deuxième température de fusion d'environ +10°C.

Cette configuration est adaptée à un refroidissement au moins à -40°C. Elle est structurellement identique à la première, mais toutefois un composant supplémentaire est ajouté avant le détendeur 40, il s'agit d'un sécheur 22 de dioxygène. En effet, le séchage par pré-refroidissement dans le condenseur 21 ne permet pas de garantir un séchage suffisant pour éviter la condensation à des températures inférieures à -30°C.

On risquerait donc d'avoir en aval du détendeur 40 la formation de goulettes d'eau qui gèleraient et pourraient entraîner des contraintes supplémentaires en termes de maintenance. Il est donc proposé d'ajouter le sécheur 22 qui se compose par exemple d'un matériau absorbant l'humidité (tel que des gels de silice ou de l'alumine). D'autres technologies, par exemple avec des membranes, sont possibles.

Grâce à la présence du pré-sécheur (le condenseur 21), la quantité résiduelle de vapeur à évacuer dans le sécheur 22 est limitée. Elle est évaluée à 1 g/kg d'H2. Ainsi, pour une station-service délivrant 100 kg de dihydrogène par jour, le sécheur 22 doit être en mesure d'absorber 100 g d'humidité par jour. Un tel sécheur 22 est connu, et peut ensuite être régénéré de manière mécanique, à l'aide d'un faible débit de dioxygène chaud et sec, par exemple celui sortant du condenseur 21 (55°C et 1 bar), par exemple sur une base journalière.

Ainsi, le sécheur 22 ne nécessite pas de branchement électrique ni de consommation électrique supplémentaire et n'impacte pas le gain de rendement obtenu grâce au présent système 1.

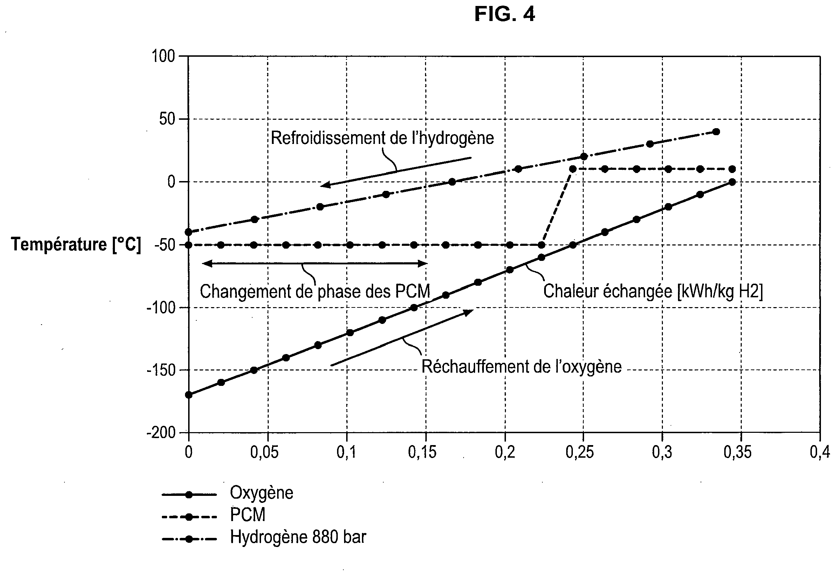

La figure 4 représente une analyse pinch des bilans énergétiques (sur le plan thermodynamique) à l'œuvre dans le système de refroidissement conforme à la figure 3b. On repère aisément l'intérêt de prendre deux matériaux à changement de phase.

Par ailleurs, bien que la figure 3b illustre le cas de figure d'un refroidissement à -40°C, on pourrait décider d'employer le même sécheur 22 pour un refroidissement à -20°C (cas de la figure 3a), afin de garantir l'absence de condensation.

Il est à noter que le concept décrit ici s'appliquerait pour toute autre température négative préconisée aujourd'hui par la norme SAE (par exemple -30°C) ou susceptible d'y être ultérieurement ajoutée (notamment - 10°C ou 0°C). Il suffit juste de choisir adéquatement la température du ou des matériaux à changement de phase, et de vérifier si un sécheur 22 supplémentaire est requis ou non.

*Procédé*

Selon un deuxième aspect, l'invention concerne également un procédé de production de dihydrogène mis en œuvre par le système 1 selon le premier aspect de l'invention.

Ce procédé comprend des étapes de :

- Electrolyse d'eau dans un électrolyseur 2 de sorte à produire du dioxygène et du dihydrogène ;
- Compression du dihydrogène par un compresseur 3 ;
- Le cas échéant, stockage/libération du dihydrogène comprimé par un équipement de gestion 30 ;
- Condensation de vapeur d'eau résiduelle mélangée avec le dioxygène dans un condenseur 21 ;
- Détente du dioxygène dans un détendeur 40 ;
- Refroidissement (à -20°/-40°C) du dihydrogène comprimé par échange thermique avec le dioxygène détendu via un échangeur 41 (en particulier à contre-courant) en échange thermique avec un module de stockage thermique 42a, 42b (en particulier passage successif dans deux matériaux à changement de phase de sorte à définir deux niveaux de refroidissement pour le dihydrogène correspondant à deux niveaux de réchauffage pour le dioxygène détendu) ;
- Le cas échéant, recirculation du dioxygène encore frais sortant de l'échangeur 41 dans le condenseur 21 de sorte à l'alimenter gratuitement en énergie ;
- Et le cas échéant distribution du dihydrogène refroidi (à -20°/- 40°C) par un équipement de distribution, typiquement pour une utilisation en station-service.

**Revendications**

1. Système (1) de production de dihydrogène comprenant :

   - un électrolyseur (2) adapté pour mettre en œuvre une électrolyse d'eau et produire du dioxygène et du dihydrogène ;
   - un compresseur (3) de dihydrogène ;
   - un refroidisseur (4) de dihydrogène ;
   - un circuit principal (10) de dihydrogène issu de l'électrolyseur (2), sur lequel sont disposés successivement au moins le compresseur (3) et le refroidisseur (4) ;
   - un circuit auxiliaire (20) de dioxygène et de vapeur d'eau résiduelle issus de l'électrolyseur (2),

   le système étant **caractérisé en ce que** :

   - il comprend en outre un condenseur (21) de ladite vapeur résiduelle ;
   - le refroidisseur (4) comprend un détendeur (40), un échangeur (41) et un module de stockage thermique (42a, 42b) ;

   le condenseur (21), le détendeur (40) et l'échangeur (41) étant successivement disposés sur le circuit auxiliaire (20), l'échangeur (41) mettant en échange thermique le dihydrogène comprimé par le compresseur (3), le dioxygène détendu par le détendeur (40) et le module de stockage thermique (42a, 42b).

2. Système selon la revendication 1, dans lequel le condenseur (21) met en échange thermique le dioxygène et la vapeur d'eau résiduelle issus de l'électrolyseur (2) avec le dioxygène sortant de l'échangeur (41) du refroidisseur (4).

3. Système selon l'une des revendications 1 et 2, dans lequel l'échangeur (41) est disposé au sein du module de stockage thermique (42a, 42b).

4. Système selon la revendication 3, dans lequel le détendeur (40) est également disposé au sein du module de stockage thermique (42a, 42b).

5. Système selon l'une des revendications 3 et 4, dans lequel le refroidisseur (4) comprend en outre une paroi isolante (43) enveloppant le module de stockage thermique (42a, 42b).

6. Système selon l'une des revendications 1 à 5, dans lequel le module de stockage thermique (42a, 42b) utilise au moins un matériau à changement de phase.

7. Système selon la revendication 6, dans lequel le module de stockage thermique (42a, 42b) comprend une première zone (42a) remplie d'un premier matériau à changement de phase présentant une première température de fusion, et une deuxième zone (42b) remplie d'un deuxième matériau à changement de phase présentant une deuxième température de fusion supérieure à la première température de fusion.

8. Système selon l'une des revendications 3 à 5 et la revendication 7 en combinaison, dans lequel l'échangeur (41) s'étend au sein de chacune des première et deuxième zones (42a, 42b) de sorte à être en échange thermique successif avec chacun des premier et deuxièmes matériaux à changement de phase.

9. Système selon la revendication 8, dans lequel l'échangeur (41) est à contre-courant, de sorte que le dioxygène détendu par le détendeur (40) est échange thermique avec le premier matériau à changement de phase puis le premier matériau à changement de phase, et le dihydrogène comprimé par le compresseur (3) est en échange thermique avec le deuxième matériau à changement de phase puis le premier matériau à changement de phase.

10. Système selon l'une des revendications 7 à 9, dans lequel la première température de fusion est inférieure à -20°C, et la deuxième température de fusion est entre 0 et 20°C.

11. Système selon la revendication 10, dans lequel la première température de fusion est inférieure à -40°C, un sécheur (22) étant disposé sur le circuit auxiliaire (20) entre le condenseur (21) et le détendeur (40).

12. Système selon l'une des revendications 1 et 11, comprenant en outre un équipement de gestion (30) du dihydrogène disposé sur le circuit principal (10) entre le compresseur (3) et le refroidisseur (4), ledit équipement de gestion (30) étant connecté à au moins un réservoir haute pression (31, 32), et configuré de sorte à fournir au refroidisseur (4) du dihydrogène de manière intermittente.

13. Système selon la revendication 12, comprenant au moins un équipement de distribution (5) disposé sur le circuit principal (10) en aval du refroidisseur (4), l'équipement de gestion (30) étant configuré pour fournir au refroidisseur (4) du dihydrogène lorsque l'équipement de distribution (5) est utilisé.

14. Système selon l'une des revendications 12 et 13, dans laquelle le compresseur (4) est également configuré de sorte à fournir à l'équipement de gestion (30) du dihydrogène de manière intermittente, de sorte à ce que la pression dans ledit réservoir haute pression (31, 32) soit compris entre un seuil minimal et un seuil maximal.

15. Système selon l'une des revendications 1 à 14, dans lequel, le dioxygène et le dihydrogène présentent en sortie de l'électrolyseur (2) des pressions d'au moins 13 bar, avantageusement au moins 30 bar.

16. Procédé de production de dihydrogène **caractérisé en ce qu'**il comprend des étapes de :

   - Electrolyse d'eau dans un électrolyseur (2) de sorte à produire du dioxygène et du dihydrogène ;
   - Compression du dihydrogène par un compresseur (3) ;
   - Condensation de vapeur d'eau résiduelle mélangée avec le dioxygène dans un condenseur (21) ;
   - Détente du dioxygène dans un détendeur (40) ;
   - Refroidissement du dihydrogène comprimé par échange thermique avec le dioxygène détendu via un échangeur (41) en échange thermique avec un module de stockage thermique (42a, 42b),

le compresseur (3) et le refroidisseur (4) étant successivement disposés sur un circuit principal (10) de dihydrogène issu de l'électrolyseur (2), et le condenseur (21), le détendeur (40) et l'échangeur (41) étant successivement disposés sur un circuit auxiliaire (20) de dioxygène et de vapeur d'eau résiduelle issus de l'électrolyseur (2).

**Patentansprüche**

1. System (1) zur Herstellung von Wasserstoff (Dihydrogen), umfassend:

   - einen Elektrolyseur (2), der geeignet ist, eine Wasserelektrolyse durchzuführen und Sauerstoff und Wasserstoff zu erzeugen;
   - einen Wasserstoffkompressor (3);
   - einen Wasserstoffkühler (4);
   - einen aus dem Elektrolyseur (2) hervorgegangenen Wasserstoff-Hauptkreislauf (10), auf dem zumindest der Verdichter (3) und der Kühler (4) nacheinander angeordnet sind;
   - einen aus dem Elektrolyseur (2) hervorgegangenen Wasserstoff- und Restwasserdampf-Hilfskreislauf (20), wobei das System **dadurch gekennzeichnet ist, dass**:
   - es ferner einen Kondensator (21) für den Restdampf umfasst;
   - der Kühler (4) einen Druckminderer (40), einen Austauscher (41) und ein Wärmespeichermodul (42a, 42b) umfasst;

wobei der Kondensator (21), der Druckminderer (40) und der Austauscher (41) nacheinander auf dem Hilfskreislauf (20) angeordnet sind, wobei der Austauscher (41) den Wärmeaustausch des durch den Kompressor (3) verdichteten Wasserstoffs, des durch den Druckminderer (40) entlasteten Sauerstoffs und des Wärmespeichermoduls (42a, 42b) herstellt.

**2.** System nach Anspruch 1, wobei der Kondensator (21) den Wärmeaustausch des aus dem Elektrolyseur (2) kommenden hervorgegangenen Sauerstoffs und des Restwasserdampfes mit dem aus dem Austauscher (41) des Kühlers (4) hervorgegangenen Wasserstoff herstellt.

**3.** System nach einem der Ansprüche 1 und 2, wobei der Austauscher (41) im Wärmespeichermodul (42a, 42b) angeordnet ist.

**4.** System nach Anspruch 3, bei dem auch der Druckminderer (40) im Wärmespeichermodul (42a, 42b) angeordnet ist.

**5.** System nach einem beliebigen der vorstehenden Ansprüche 3 und 4, wobei der Kühler (4) ferner eine isolierende Wand (43) umfasst, die das Wärmespeichermodul (42a, 42b) umgibt.

**6.** System nach einem der Ansprüche 1 bis 5, wobei das Wärmespeichermodul (42a, 42b) zumindest ein Phasenänderungsmaterial verwendet.

**7.** System nach Anspruch 6, wobei das Wärmespeichermodul (42a, 42b) einen ersten Bereich (42a) umfasst, der mit einem ersten Phasenänderungsmaterial gefüllt ist, das eine erste Schmelztemperatur aufweist, und einen zweiten Bereich (42b), der mit einem zweiten Phasenänderungsmaterial gefüllt ist, das eine zweite Schmelztemperatur aufweist, die höher als die erste Schmelztemperatur ist.

**8.** System nach einem der Ansprüche 3 bis 5 und Anspruch 7 in Kombination, wobei sich der Austauscher (41) in jedem des ersten und zweiten Bereichs (42a, 42b) erstreckt, so dass er im Wärmeaustausch mit nacheinander jedem der ersten und zweiten Phasenänderungsmaterialien steht.

**9.** System nach Anspruch 8, wobei der Austauscher (41) einen Gegenstrom aufweist, so dass der durch den Druckminderer (40) entlastete Sauerstoff mit dem ersten Phasenänderungsmaterial im Wärmeaustausch steht, und dann das erste Phasenänderungsmaterial und der vom Kompressor (3) verdichtete Sauerstoff im Wärmeaustausch mit dem zweiten Phasenänderungsmaterial und dann dem ersten Phasenänderungsmaterial steht.

**10.** System nach einem der Ansprüche 7 bis 9, wobei die erste Schmelztemperatur unter -20°C liegt und die zweite Schmelztemperatur zwischen 0 und 20°C liegt.

**11.** System nach Anspruch 10, wobei die erste Schmelztemperatur unter -40°C liegt, wobei ein Trockner (22) auf dem Hilfskreislauf (20) zwischen dem Kondensator (21) und dem Druckminderer (40) angeordnet ist.

**12.** System nach einem der Ansprüche 1 und 11, ferner umfassend eine Wasserstoff-Verwaltungsausrüstung (30), die auf dem Hauptkreislauf (10) zwischen dem Kompressor (3) und dem Kühler (4) angeordnet ist, wobei die Verwaltungsausrüstung (30) mit zumindest einem Hochdrucktank (31, 32) verbunden und so konfiguriert ist, dass sie den Kühler (4) intermittierend mit Wasserstoff versorgt.

**13.** System nach Anspruch 12, umfassend zumindest eine Verteilerausrüstung (5), die auf dem Hauptkreislauf (10) stromabwärts vom Kühler (4) angeordnet ist, wobei die Verwaltungsausrüstung (30) so konfiguriert ist, dass sie den Kühler (4) mit Wasserstoff versorgt, wenn die Verteilerausrüstung (5) verwendet wird.

**14.** System nach einem der Ansprüche 12 und 13, wobei der Kompressor (4) auch so konfiguriert ist, dass er der Verwaltungsausrüstung (30) intermittierend Wasserstoff zuführt, so dass der Druck im Hochdrucktank (31, 32) zwischen einem minimalen Schwellenwert und einem maximalen Schwellenwert liegt.

**15.** System nach einem der Ansprüche 1 bis 14, wobei der Sauerstoff und der Wasserstoff am Ausgang des Elektrolyseurs (2) Drücke von zumindest 13 bar, vorteilhafterweise zumindest 30 bar aufweisen.

**16.** Verfahren zur Herstellung von Wasserstoff, **dadurch gekennzeichnet, dass** es die folgenden Schritte umfasst:

- Wasserelektrolyse in einem Elektrolyseur (2) zur Herstellung von Sauerstoff und Wasserstoff;
- Verdichtung des Wasserstoffs durch einen Kompressor (3);
- Kondensation von Restwasserdampf in Mischung mit Sauerstoff in einem Kondensator (21);
- Sauerstoffentlastung Druckminderer (40);
- Kühlung des verdichteten Wasserstoffs durch Wärmeaustausch mit dem entlasteten Sauerstoff über einen Austauscher (41) im Wärmeaustausch mit einem Wärmespeichermodul (42a, 42b),

wobei der Kompressor (3) und der Kühler (4) nacheinander auf einem Hauptkreislauf (10) mit aus dem Elektrolyseur (2) kommendem Wasserstoff angeordnet sind, und wobei der Kondensator (21), der Druckminderer (40) und der Austauscher (41) nacheinander auf einem Hilfskreislauf (20) mit aus dem Elektrolyseur (2) kom-

mendem Sauerstoff und Restwasserdampf ange-ordnet sind.

## Claims

1. A system (1) for producing dihydrogen comprising:

    - an electrolyser (2) suitable for implementing water electrolysis and producing dioxygen and dihydrogen;
    - a dihydrogen compressor (3);
    - a dihydrogen cooler (4);
    - a main circuit (10) of dihydrogen from the electrolyser (2), on which at least the compressor (3) and the cooler (4) are successively arranged;
    - an auxiliary circuit (20) of dioxygen and residual water vapour from the electrolyser (2),

    the system being **characterised in that**:

    - it further comprises a condenser (21) of said residual vapour;
    - the cooler (4) comprises an expander (40), an exchanger (41) and a heat storage module (42a, 42b);

    the condenser (21), the expander (40) and the exchanger (41) being successively arranged on the auxiliary circuit (20), the exchanger (41) operating heat exchange between the dihydrogen compressed by the compressor (3), the dioxygen expanded by the expander (40) and the heat storage module (42a, 42b).

2. The system according to claim 1, wherein the condenser (21) operates heat exchange between the dioxygen and the residual water vapour from the electrolyser (2) with the dioxygen leaving the exchanger (41) of the cooler (4).

3. The system according to one of claims 1 and 2, wherein the exchanger (41) is arranged within the heat storage module (42a, 42b).

4. The system according to claim 3, wherein the expander (40) is also arranged within the heat storage module (42a, 42b).

5. The system according to one of claims 3 and 4, wherein the cooler (4) further comprises an insulating wall (43) wrapping the heat storage module (42a, 42b).

6. The system according to one of claims 1 to 5, wherein the heat storage module (42a, 42b) uses at least one phase change material.

7. The system according to claim 6, wherein the heat storage module (42a, 42b) comprises a first zone (42a) filled with a first phase change material having a first melting temperature, and a second zone (42b) filled with a second phase change material having a second melting temperature higher than the first melting temperature.

8. The system according to one of claims 3 to 5 and claim 7 in combination, wherein the exchanger (41) extends within each of the first and second zones (42a, 42b) so as to be in successive heat exchange with each of the first and second phase change materials.

9. The system according to claim 8, wherein the exchanger (41) is a counter-current exchanger, such that the dioxygen expanded by the expander (40) is in heat exchange with the first phase change material and then the second phase change material, and the dihydrogen compressed by the compressor (3) is in heat exchange with the second phase change material and then the first phase change material.

10. The system according to one of claims 7 to 9, wherein the first melting temperature is lower than -20°C, and the second melting temperature is between 0 and 20°C.

11. The system according to claim 10, wherein the first melting temperature is lower than -40°C, a dryer (22) being arranged on the auxiliary circuit (20) between the condenser (21) and the expander (40).

12. The system according to one of claims 1 and 11, further comprising a piece of management equipment (30) for managing the dihydrogen arranged on the main circuit (10) between the compressor (3) and the cooler (4), said piece of management equipment (30) being connected to at least one high pressure tank (31, 32), and configured so as to provide dihydrogen to the cooler (4) intermittently.

13. The system according to claim 12, comprising at least one piece of distribution equipment (5) arranged on the main circuit (10) downstream of the cooler (4), the piece of management equipment (30) being configured to provide dihydrogen to the cooler (4) when the piece of distribution equipment (5) is used.

14. The system according to one of claims 12 and 13, wherein the compressor (4) is also configured so as to provide dihydrogen to the piece of management equipment (30) intermittently, such that the pressure in said high pressure tank (31, 32) is between a minimum threshold and a maximum threshold.

**15.** The system according to one of claims 1 to 14, wherein the dioxygen and dihydrogen have at the outlet of the electrolyser (2) pressures of at least 13 bar, advantageously at least 30 bar.

**16.** A method for producing dihydrogen **characterised in that** it comprises the steps of:

> - electrolysing water in an electrolyser (2) so as to produce dioxygen and dihydrogen;
> - compressing the dihydrogen by a compressor (3);
> - condensing residual water vapour mixed with the dioxygen in a condenser (21);
> - expanding the dioxygen in an expander (40);
> - cooling compressed dihydrogen by heat exchange with the dioxygen expanded via an exchanger (41) in heat exchange with a heat storage module (42a, 42b),

the compressor (3) and the cooler (4) being successively arranged on a main circuit (10) of dihydrogen from the electrolyser (2), and
the condenser (21), the expander (40) and the exchanger (41) being successively arranged on an auxiliary circuit (20) of dioxygen and residual water vapour from the electrolyser (2).

**FIG. 1a**
**Art antérieur**

$2 H_2 \rightarrow 4 H^+ + 4 e^-$

$4 e^-$

$4 H^+$

$2 H_2O + Azote$

$O_2 + 4 H^+ + 4 e^- \rightarrow 2 H_2O$

$2 H_2$

Air

Anode    Cathode
Electrode

# FIG. 1b
## Art antérieur

Electricité
55 kWh/kg

1 $H_2O$,
1 bar, 15°C

1/2 $O_2$,
~60°C, 35bar

20

**2**

10

1 $H_2$,
35 bar, ~25°C

**11**

Electricité
~5 kWh/kg 20 kW

**3**

1 H2,
420 bar, ~25°C

**30**

1 $H_2$,
420 bar, ~25°C

1 $H_2$, ~420 bar
ou
~880 bar, ~25°C

(9)

**4**

1 $H_2$, 700 bar,
-20 ou -40°C
ou

1 $H_2$,350 bar,
-20 ou -40°C

**5**

$H_2$

31

32

EP 3 400 321 B1

## FIG. 2

Electricité
55 kWh/kg

1 $H_2O$,
1 bar, 15°C

1 $H_2$, 700 bar,
-20 ou -40°C
ou

1 $H_2$,350 bar,
-20 ou -40°C

1/2 $O_2$, ~60°C, 35bar

20

10

1 $H_2$,
35 bar, ~25°C

Electricité
~5 kWh/kg 20 kW

1 H2,
420 bar, ~25°C

1 $H_2$, ~420 bar
ou
~880 bar, ~25°C

(9)

1 $H_2$,
420 bar, ~25°C

1/2 $O_2$,
~55°C, 1bar

31

32

2

3

30

4

11

5

1

EP 3 400 321 B1

**FIG. 3a**

1/2 O₂, ~60°C, 35 bar

$1/2\ O_2,\ \sim 60°C,\ 35\ bar$

$1/2\ O_2\sim 10°C\ 35\ bar$

4

$1/2\ O_2\sim 0°C\ 1\ bar$

Condensat

$1/2\ O_2\sim 55°C\ 1\ bar$

PCM 1 -30°C

$1/2\ O_2\text{-}170°C\ 1\ bar$

40

$1\ H_2,\ -20°C,$
420 ou 880 bar

5

H₂

42a

41

$1\ H_2,\ <40°C,\ 420\ bar$
Ou
$1\ H_2,\ <40°C,\ 880\ bar$

30

10

42b

PCM 2 +10°C

2

21

43

20

EP 3 400 321 B1

FIG. 3b

## FIG. 4

EP 3 400 321 B1